# EUROPEAN PATENT APPLICATION

(11) **EP 4 779 708 A2**
(43) Date of publication of application: **22.07.2026**
(21) Application number: 26152058.9
(22) Date of filing: 15.01.2026
(51) Int. Cl.: H01M 4/136, H01M 4/36, H01M 4/38, H01M 4/58, H01M 10/0525

(54) **METALIZED SILICON OXIDE ACTIVE MATERIALS AND METHODS OF FORMING THE SAME**

(30) Priority: 20.01.2025 US 202563747235 P
(71) Applicant: Nanograf Corporation, Chicago, Illinois 60642 (US)
(72) Inventor: BREITENKAMP, Kurt, Chicago, 60642 (US); BECKNELL, Nigel, Chicago, 60642 (US); DOWNING, Julia R., Chicago, 60642 (US)
(74) Representative: Cleveland Scott York

(57) **Abstract**

Active material particles (100) for a lithium ion secondary battery each include a primary phase (120) comprising lithium silicate, silicon nanoparticles (122) disposed in the primary phase (120), and nitrogen-based species (128).

## Description

### TECHNICAL FIELD

Aspects of the present disclosure relate to metalized silicon oxide active materials, negative electrodes including the same, and batteries including the negative electrodes, and methods of forming the same.

### BACKGROUND

Lithium (Li) ion electrochemical cells typically require materials that enable high energy density, high power density and high cycling stability. Li ion cells are commonly used in a variety of applications, which include consumer electronics, wearable computing devices, military mobile equipment, satellite communication, spacecraft devices and electric vehicles, and are particularly popular for use in large-scale energy applications such as low-emission electric vehicles, renewable power plants, and stationary electric grids. Additionally, lithium-ion cells are at the forefront of new generation wireless and portable communication applications. One or more lithium ion cells may be used to configure a battery that serves as the power source for any of these applications. It is the explosion in the number of higher energy demanding applications, however, that is accelerating research for yet even higher energy density, higher power density, higher-rate charge-discharge capability, and longer cycle life lithium ion cells. Additionally, with the increasing adoption of lithium-ion technology, there is an ever increasing need to extend today's energy and power densities, as applications migrate to higher current needs, longer run-times, wider and higher power ranges and smaller form factors.

Silicon or silicon alloy anode materials are currently included in most long-term lithium-ion technology adoption roadmaps as a practical means to achieve higher energy and power densities. Silicon is a desirable negative electrode active material for lithium ion electrochemical cell applications having a theoretical gravimetric capacity of about 3579 mAh/g and volumetric capacity of about 8303 mAh/cm³. Silicon is also a desirable replacement for current graphite-based anodes as its high lithium storage capacity can exceed 7x that of graphite. Market adoption of silicon-based anodes for use in lithium ion cells, however, has been challenged by rapid cycle life degradation, poor charge-discharge rate capability under high power demands, and subpar or deficient coulombic efficiency, all of which may result from extreme anode volume changes during charge and discharge (volume expansions of up to 400% have been noted). Cycle life degradation in silicon-based alloys is well understood and can be broken down into two fundamental mechanisms: (1) electrical disconnection, and (2) unstable solid electrolyte interface (SEI) resulting in lithium ion consumption and impedance growth. High rate capability and coulombic efficiency are also compromised by these mechanisms. Electrical disconnection occurs with significant volume fluctuations during charge and discharge due to large volume changes upon lithiation and delithiation.

These large volume changes may cause pulverization (stress-induced cracking and fracture) of the silicon particles and loss of electrical contact between these active silicon particles. The result is an electrochemical cell having low power capability and rapid capacity fade. The cracking and fracture introduced in mechanism (1) further worsens cell performance by subsequently promoting mechanism (2), an unstable SEI. Because cracking and fracture expose new Si surfaces to the electrolyte solvents, further SEI formation occurs, depositing lithiated compounds on the new Si surfaces. During charge/discharge cycling, the insulating SEI layer also grows thicker, further degrading the capacity and cycling stability of the Si anode, and compromising charge/discharge rate capability and coulombic efficiency.

Continuous and new growth of the SEI layer gradually depletes the available Li⁺ and, due to side reactions with the electrolyte solvent and salt(s), the amount of serviceable electrolyte is depleted as well, thereby deteriorating overall electrochemical cell performance. The use of silicon-based anodes in applications requiring high electrochemical cell charge/discharge rates, therefore, is severely limited resultant from the high ohmic and ionic contributions to polarization resulting from these mechanisms.

### SUMMARY

Various embodiments of the present disclosure provide active material particles for a lithium ion secondary battery, the particles each comprising: a primary phase comprising lithium silicate; silicon nanoparticles disposed in the primary phase; and nitrogen-based species.

Various embodiments of the present disclosure provide a method of forming active material particles which comprises providing a powder mixture comprising lithium-containing dopant material powder particles and powder particles comprising silicon oxide; and heating the powder mixture to form the active material particles comprising a primary phase comprising lithium silicate; and silicon nanoparticles disposed in the primary phase.

### BRIEF DESCRIPTION OF THE DRAWINGS

FIG. 1 is a cross-sectional diagram of an active material particle, according to various embodiments of the present disclosure.
FIGS. 2A, 2B, 2C and 2D are graphs showing X-ray diffraction patterns for exemplary active material particles, according to various embodiments of the present disclosure.

### DETAILED DESCRIPTION OF THE PREFERRED EMBODIMENTS

The various embodiments will be described in detail with reference to the accompanying drawings. Wherever possible, the same reference numbers will be used throughout the drawings to refer to the same or like parts. References made to particular examples and implementations are for illustrative purposes and are not intended to limit the scope of the invention or the claims.

It will be understood that when an element or layer is referred to as being "on" or "connected to" another element or layer, it can be directly on or directly connected to the other element or layer, or intervening elements or layers may be present. In contrast, when an element is referred to as being "directly on" or "directly connected to" another element or layer, there are no intervening elements or layers present. It will be understood that for the purposes of this disclosure, "at least one of X, Y, and Z" can be construed as X only, Y only, Z only, or any combination of two or more items X, Y, and Z (e.g., XYZ, XYY, YZ, ZZ).

Where a range of values is provided, it is understood that each intervening value, to the tenth of the unit of the lower limit unless the context clearly dictates otherwise, between the upper and lower limit of that range and any other stated or intervening value in that stated range is encompassed within the invention. The upper and lower limits of these smaller ranges may independently be included in the smaller ranges is also encompassed within the invention, subject to any specifically excluded limit in the stated range. Where the stated range includes one or both of the limits, ranges excluding either or both of those included limits are also included in the invention. It will also be understood that the term "about" may refer to a minor measurement errors of, for example, +/- 5% to 10%.

Words such as "thereafter," "then," "next," etc. are not necessarily intended to limit the order of the steps; these words may be used to guide the reader through the description of the methods. Further, any reference to claim elements in the singular, for example, using the articles "a," "an" or "the" is not to be construed as limiting the element to the singular.

An "electrode material" is defined as a material that may be configured for use as an electrode within an electrochemical cell, such as a lithium ion rechargeable battery. An "electrode" is defined as either an anode or a cathode of an electrochemical cell.

An electrically conductive material may be selected from the group consisting of an electrically conductive carbon-based material, an electrically conductive polymer, graphite, a metallic powder, nickel, aluminum, titanium, stainless steel, and any combination thereof. The electrically conductive carbon-based material may further include one of graphite, graphene, diamond, pyrolytic graphite, carbon black, low defect turbostratic carbon, fullerenes, or combinations thereof. An "electrode material mixture" is defined as a combination of materials such as: material particles (either electrochemically active, electrically conductive, composite or combinations thereof), a binder or binders, a non-crosslinking and/or a crosslinking polymer or polymers, which are mixed together for use in forming an electrode for an electrochemical cell. An "electrochemically active material", "electrode active material" or "active material" is defined herein as a material that inserts and releases ions such as ions in an electrolyte, to store and release an electrical potential. The term "inserts and releases" may be further understood as ions that intercalate and deintercalate, or lithiate and delithiate. The process of inserting and releasing of ions is also understood, therefore, to be intercalation and deintercalation, or lithiation and delithiation. An "active material" or an "electrochemically active material" or an "active material particle", therefore, is defined as a material or particle capable of repeating ion intercalation and deintercalation or lithium lithiation and delithiation.

As defined herein, a secondary electrochemical cell is an electrochemical cell or battery that is rechargeable. "Capacity" is defined herein as a measure of charge stored by a battery as determined by the mass of active material contained within the battery, representing the maximum amount of energy, in ampere-hours (Ah), which can be extracted from a battery at a rated voltage. Capacity may also be defined by the equation: capacity = energy/voltage or current (A) x time (h). "Energy" is mathematically defined by the equation: energy = capacity (Ah) x voltage (V). "Specific capacity" is defined herein as the amount of electric charge that can be delivered for a specified amount of time per unit of mass or unit of volume of active electrode material. Specific capacity may be measured in gravimetric units, for example, (Ah)/g or volumetric units, for example, (Ah)/cc. Specific capacity is defined by the mathematical equation: specific capacity (Ah/kg) = capacity (Ah)/mass (kg). "Rate capability" is the ability of an electrochemical cell to receive or deliver an amount of energy within a specified time period. Alternately, "rate capability" is the maximum continuous or pulsed energy a battery can provide per unit of time.

"C-rate" is defined herein as a measure of the rate at which a battery is discharged relative to its maximum nominal capacity. For example, a 1C current rate means that the discharge current will discharge the entire battery in 1 hour; a C/2 current rate will completely discharge the cell in 2 hours and a 2C rate in 0.5 hours. "Power" is defined as the time rate of energy transfer, measured in Watts (W). Power is the product of the voltage (V) across a battery or cell and the current (A) through the battery or cell. "C-Rate" is mathematically defined as C-Rate (inverse hours) = current (A)/capacity (Ah) or C-Rate (inverse hours) = 1/discharge time (h). Power is defined by the mathematical equations: power (W) = energy (Wh)/time (h) or power (W) = current (A) x voltage (V). Coulombic efficiency is the efficiency at which charge is transferred within an electrochemical cell. Coulombic efficiency is the ratio of the output of charge by a battery to the input of charge.

### Active Material Particles

Silicon and silicon alloys may significantly increase cell capacity when incorporated within an electrode of an electrochemical cell. Silicon and silicon alloys are often incorporated within an electrode comprising graphite, graphene, or other carbon-based active materials. Examples of electrodes comprising carbon-based materials and silicon are provided in U.S. patents 8,551,650, 8,778,538, and 9,728,773 to Kung et al., and U.S. patents 10,135,059 and 10,135,063 to Huang et al., all the contents of which are fully incorporated herein by reference.

Herein, "SiO materials" may generally refer to silicon and oxygen-containing materials. SiO materials are of interest for use in anode electrodes of lithium-ion batteries, due to having high theoretical energy and power densities. However, the utilization of current commercial SiO materials, such as silicon oxide (e.g., SiOₓ, wherein x ranges from 0.8 to 1.2, such as from 0.9 to 1.1) has been limited due to having a low 1^{st} cycle efficiency and a high irreversibility. This low 1^{st} cycle efficiency is believed to be due to high irreversible Li⁺ ion reaction with the silicon oxide primary phase.

In order to decrease the irreversible Li⁺ reaction with silicon oxide, various embodiments include metalized (e.g., metal-doped) SiO materials (M-SiO). Herein, M-SiO materials may refer to active materials that are directly reacted with metal-containing precursors, such as alkali and/or alkali earth containing precursors, such as for example, lithium-containing precursors, or the lithium-containing precursors in combination with boron-containing precursors, aluminum-containing precursors and/or magnesium-containing precursors, to form metalized silicon and oxygen-containing phases, prior to being utilized in a battery as an active material and/or undergoing charge and discharge reactions. In one embodiment, all or some of the metalizing metal may remain in the active material and does not insert or de-insert during battery charging and discharging. Accordingly, M-SiO materials may refer to lithium-metalized SiO (LM-SiO) materials, lithium and boron metalized (LBM-SiO) materials, lithium and aluminum metalized (LAM-SiO) materials, and/or lithium and magnesium metalized SiO (LMM-SiO) materials. However, in some embodiments, M-SiO materials may include SiO materials that are metalized to include other suitable alkali and/or alkali earth metals, such as sodium, potassium, calcium, or the like. For example, in some embodiments, M-SiO materials may be metalized to include magnesium, aluminum, boron, lithium, sodium, potassium, calcium, or any combinations thereof.

Electrode materials including M-SiO active materials may provide increased 1^{st} cycle efficiency (FCE), as compared to non-metalized SiO materials. However, some prior art M-SiO materials suffer from severe electrical disconnection and rapid capacity loss, often leading to more than 90% capacity fade within 20 cycles. Coating M-SiO materials with carbon and/or other materials, and/or blending M-SiO materials with graphite reduces the electrical disconnection and capacity loss of active materials, such that the active materials experience only 20% or less capacity loss after at least 500 cycles, such as after 700 to 1000 cycles.

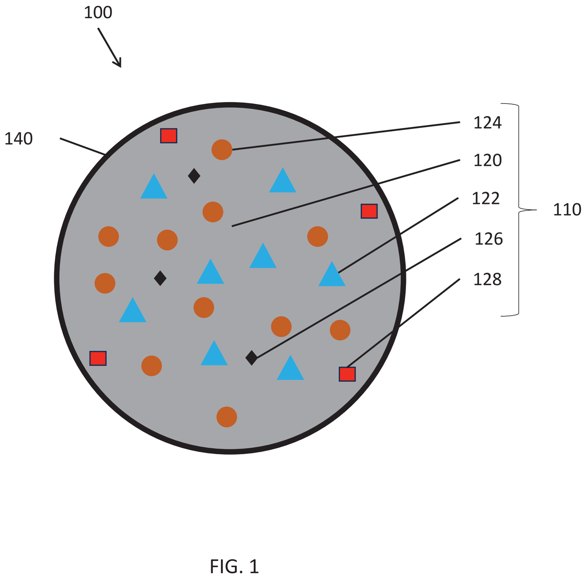

FIG. 1 is a cross-sectional diagram of an active material particle 100, according to various embodiments of the present disclosure. Referring to FIG. 1, the particle 100 may comprise a core particle 110 comprising a M-SiO material, and an optional reaction control coating 140 covering the core particle 110. The core particle 110 may include a primary phase 120 or matrix comprising lithium-metalized (LM) silicon species such as lithium silicate or a combination of lithium silicate and lithium silicide (LiₓSi, 0<x<4.4). For example, in some embodiments the matrix 120 may comprise one or more lithium silicates, such as lithium disilicate (Li₂Si₂O₅), lithium metasilicate (Li₂SiO₃), and/or lithium orthosilicate (Li₄SiO₄). Preferably, the primary phase 120 may comprise lithium metasilicate (Li₂SiO₃), lithium disilicate (Li₂Si₂O₅) or a combination thereof as a primary component, and optionally comprise lithium silicide (LiₓSi, 0<x<4.4), lithium orthosilicate (Li₄SiO₄), and/or the other one of lithium metasilicate or lithium disilicate as a secondary component. For example, the matrix 120 may comprise at least 50 wt.%, such as at least 70 wt.%, at least 80 wt.%, at least 90 wt.%, or at least 95 wt.%, for example 50 to 99 wt.%, of the primary component (e.g., lithium metasilicate and/or lithium disilicate). The matrix 120 may include a corresponding amount of the secondary component(s).

In various embodiments, the active material 100 may have a lithium content ranging from about 0.5 wt.% to about 12 wt.%, such as from about 1 wt.% to about 11 wt.%, from about 2 wt.% to about 10 wt.%, or from about 5 wt.% to about 10 wt.%.

The core particle 110 may optionally include nanoparticles (e.g., domains) dispersed within the primary phase 120 as secondary phases dispersed in the primary phase 120. For example, the core particle 110 may include Si nanoparticles 122 and/or SiOₓ regions 124, wherein x ranges from 0.8 to 2, such as from 0.8 to 1.2, or from 0.9 to 1.1. The SiOₓ regions 124 may comprise SiOₓ nanoparticles (e.g., domains) or portions of the matrix 120.

The Si nanoparticles 122 may include amorphous and/or crystalline silicon nanoparticles. The Si nanoparticles 122 may have a particle size (i.e., domain size) of less than about 60 nm, such as less than about 50 nm, less than about 40 nm, less than about 20 nm, or less than about 10 nm. For example, the Si nanoparticles 122 may have an average particle size ranging from about 1 nm to about 50 nm, such as from about 1 nm to about 10 nm, or from about 2 nm to about 8 nm. In various embodiments, the active material 100 may comprise 20 to 60 wt.%, such as 25 to 55 wt.%, for example 30 to 50 wt.%, including 30 to 40 wt.% of Si nanoparticles. In some embodiments more than 50 % of the Si nanoparticles comprise amorphous silicon nanoparticles, such as 55 to 97 %, for example 60 to 95 % amorphous Si nanoparticles, and less than 50 % crystalline Si nanoparticles, such as 3 to 45 %, for example 5 to 40 % crystalline silicon nanoparticles.

In some embodiments, the matrix 120 may optionally comprise nanoparticles 126 including an element in addition to silicon, oxygen and/or lithium, such as magnesium-metallized (MM) silicon species, aluminum-metallized (AM) silicon species and/or boron oxide species. For example, the optional nanoparticles 126 may comprise boron oxide species (e.g., B₂O₃) or boron doped silicon oxide or a combination thereof. Alternatively or in addition, the optional nanoparticles 126 may comprise magnesium silicate species, such as MgSiO₃ and/or Mg₂SiO₄, aluminum silicate species, such as Al₂SiO₅, or a combination thereof. In some embodiments, the core particle 110 may have a B, Al and/or Mg content ranging from 0.05 wt.% to about 10 wt.%, such as from about 0.1 wt.% to about 8 wt.%, or from about 1 wt.% to about 5 wt.%. In some embodiments, the nanoparticles 126 may be omitted.

In some embodiments, the active material 100 may optionally include a nitrogen-based species 128. For example, the core particle 110 may optionally include the nitrogen-based species 128, such as at least one of amide species, such as lithium amide (LiNH₂), imide species, such as lithium imide (Li₂NH), oxynitride species, such as silicon oxynitride (SiOₓN_{y}), nitride species, such as silicon nitride (e.g., stoichiometric silicon nitride, Si₃N₄ or non-stoichiometric (i.e., silicon-rich or nitrogen-rich) silicon nitride) and/or lithium nitride Li₃N, amine species, such as Si₂NH, or the like, in an amount ranging from 0.1 wt.% to 10 wt.% nitrogen, such as from about 0.25 wt.% to about 6 wt.% nitrogen. The nitrogen-based species 128 may comprise nitrogen containing regions, such as at least one of discrete domains, diffuse regions, a partial outer shell, or a complete outer shell. The core particles 110 may having a higher concentration of the nitrogen-based species 128 closer to the outer surface of the core particle 110 than closer to the middle of the core particle 110. The nitrogen-based species 128 may be amorphous. The nitrogen-based species 128 may result from using a nitrogen-containing lithium dopant species which provides both lithium and nitrogen doping to the core particles 110 as will be described in more detail below.

In various embodiments, the core particles 110 may have an average particle size ranging from about 1 µm to about 20 µm, such as from about 8 µm to about 14 µm, from about 9 µm to about 13 µm, or from about 10 µm to about 12 µm. The core particles 110 may have a bulk density ranging from about 0.3 g/ml to about 0.8 g/ml, such as from about 0.35 g/ml to about 0.5 g/ml, or about 0.4 g/ml. The core particles 110 may have a tap density ranging from about 0.8 g/ml to about 1.4 g/ml, such as from about 0.95 g/ml to about 1.0 g/ml, or about 0.974 g/ml. The core particles 110 may have a specific surface area ranging from about 0.5 m²/g to about 4.0 m²/g, such as from about 0.75 m²/g to about 2 m²/g, from about 0.8 m²/g to about 1.5 m²/g, or about 0.85 m²/g.

The optional coating 140 may comprise a material configured to control metal diffusion into the core particles 110 and/or control reactions between the core particle 110 and a lithium-containing dopant, such as a lithium salt or lithium metal, as will be described in more detail below. For example, the coating 140 may include a carbon coating, such as amorphous carbon, and/or a metal oxide coating. Suitable metal oxide materials may include titania, alumina, zinc oxide, combinations thereof, or the like. In some embodiments, the coating 140 may represent from about 0.25 wt% to about 10 wt%, such as from about 0.5 wt% to about 7 wt%, or from about 0.75 wt.% to about 5 wt.% of the total weight of the active particle 100.

During an initial charging reaction and/or subsequent charging reactions, the composition of the active material particles 100 may change due to lithiation and/or other reactions. For example, Si and SiOₓ may be lithiated to form LiₓSi domains or additional lithium silicate domains. In addition, some SiOₓ may form inactive species, such as inactive lithium silicates and Li₂O.

### Core Particle Formation

According to various embodiments, the active material particles 100 may be formed by forming a mixture comprising particles comprising silicon oxide, such as amorphous silicon oxide particles, and at least one lithium-containing dopant material particles, such as particles of lithium metal and/or a lithium-containing compound, such as a lithium salt. In particular, the mixture may be a dry mixture (i.e., a powder mixture of solid particles comprising silicon oxide and solid lithium-containing dopant material particles, preferably without a solvent) formed by mechanical milling, acoustic mixing, conical low-shear mixing, or the like. The amount of lithium-containing dopant material, such as a lithium salt included in the mixture may be selected to produce an active material powder having from about 1 wt.% to about 12 wt.% lithium, based on a total weight of the active material powder.

The particles comprising silicon oxide may comprise amorphous silicon oxide (e.g., SiOₓ, wherein x ranges from 0.8 to 1.2, such as from 0.9 to 1.1) particles. The silicon oxide particles may be undoped or may be optionally doped with magnesium (Mg), aluminum (Al) and/or boron (B). For example, the doped silicon oxide particles may comprise from about 0.05 wt.% to about 10 wt.%, such as from about 0.1 wt.% to about 8 wt.%, or about 1 wt.% to about 5 wt.% B, Al and/or Mg. In one embodiment, the doped silicon oxide particles may be formed by sublimation of Mg, Al and/or B precursors (e.g., magnesium, aluminum, and/or boron salt) into amorphous silicon oxide particles.

In some embodiments, the silicon oxide particles may be coated with the coating 140, such as a carbon coating, such as an amorphous carbon coating, or a metal oxide coating, such as a coating comprising titania, alumina, zinc oxide, combinations thereof, or the like.

In some embodiments, the silicon oxide particles may be milled to a desired particle size prior to the mixing. For example, jet milling, ball milling, or the like may be used to reduce the particle size of the silicon oxide particles to a median (d50) particle size of about 5 to about 20 microns, such as about 10 to about 50 microns.

The lithium-containing dopant material may comprise a lithium salt and/or lithium metal. The lithium salt may comprise a lithium salt powder selected from lithium carbonate (Li₂CO₃), lithium hydroxide (LiOH), lithium amide (LiNH₂), lithium hydride (LiH), lithium imide (Li₂NH), lithium nitride (Li₃N), lithium acetate (LiCH₃CO₂), and/or lithium oxide (Li₂O), a combination thereof, or the like. If nitrogen-containing lithium salt particles are used as the lithium-containing dopant material, then both nitrogen and lithium may diffuse into the active material particles through the coating 140, which may form the nitrogen-based species 128.

In some embodiments, the lithium-containing dopant material particles may be milled to a desired particle size prior to the mixing. For example, jet milling, ball milling, or the like may be used to reduce the particle size of the lithium salt particles to a median (d50) particle size of about 25 to about 250 microns, such as about 30 to about 220 microns. Thus, the lithium-containing dopant material particles may have a larger average particle size than the silicon oxide particles.

The amount of lithium-containing dopant material included in the powder mixture may be controlled such that the active material particles 100 (e.g., the core particles 110) have a lithium content ranging from about 1 wt.% to about 12 wt.%, such as from about 5 wt.% to about 10 wt.%.

The powder mixture may be heated to diffuse lithium from the lithium-containing dopant material (e.g., lithium salt) particles into the silicon oxide particles and form the core particles 110 (e.g., the lithium silicate primary phase matrix). In particular, the mixture may be heated at a temperature of 1000 °C or less, such as a temperature ranging from about 200 °C to about 800 °C, such as from about 400 °C to about 700 °C, in an inert atmosphere. The mixture may be heated using thermal heating, such as a static tube furnace, a rotary kiln, a fluidized bed reactor, a roller hearth kiln, a microwave furnace, a heated mixer, or the like.

In other embodiments, the mixture may be heated using a microwave oven or reactor, in an inert atmosphere. In particular, it is believed that the microwaves strongly interact with the functional groups of the lithium salt, resulting in the direct heating of the lithium salts and diffusion of lithium into the silicon oxide particles. For example, microwave heating may be used to heat the mixture at a temperature of 500 °C or less, such as a temperature ranging from about 125 °C to about 450 °C, such as from about 150 °C to about 400 °C.

It is believed that lower lithium diffusion temperatures may result in core particles 110 having lower crystallinities. Furthermore, the controlled solid phase powder mixture reaction is believed to result in a core particle 110 having a primary phase matrix comprising at least 50 wt.% of lithium metasilicate and/or lithium disilicate.

In summary, a method of forming active material particles 100 includes providing a powder mixture comprising lithium-containing dopant material powder particles and powder particles comprising silicon oxide; and heating the powder mixture to form the active material particles 100 comprising a primary phase 120 comprising lithium silicate, and silicon nanoparticles 122 disposed in the primary phase 120.

In one embodiment, the powder mixture comprises a dry powder mixture which lacks a solvent. In one embodiment, the powder particles comprising silicon oxide are coated with the coating 140 comprising amorphous carbon or metal oxide, and lithium diffuses from the lithium-containing dopant material powder particles through the coating 140 into the powder particles comprising silicon oxide during the step of heating the powder mixture.

In one embodiment, using a nitrogen-based species in the furnace enables nitrogen to diffuse through the coating 140 into the powder particles comprising silicon oxide during the step of heating the powder mixture to form nitrogen-based species 128 in the active material particles 100. In one embodiment, the powder particles comprising silicon oxide are converted into the core particles 110 comprising the primary phase 120 during the step of heating the powder mixture, the nitrogen-based species 128 comprise at least one of amorphous silicon oxynitride regions or amorphous silicon nitride regions in the core particles 110, the core particles 110 have a higher concentration of the nitrogen-based species 128 closer to an outer surface of the core particles than closer to a middle of the core particles 100, and a nitrogen content of the active material particles 100 ranges from about 0.1 wt.% to about 10 wt.%.

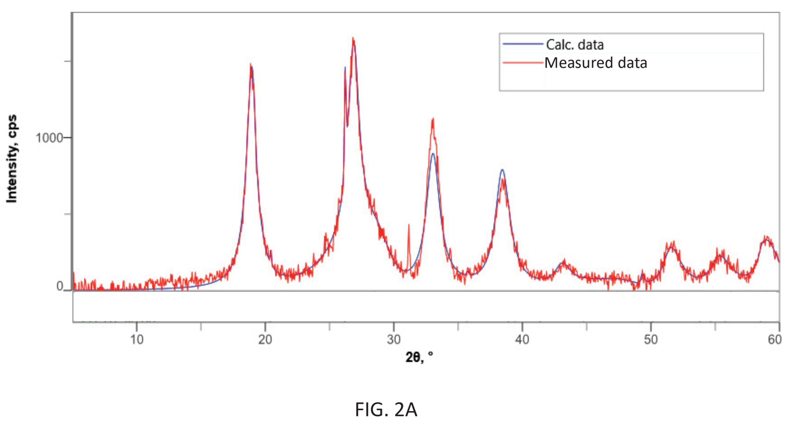

FIGS. 2A - 2D are graphs showing X-ray diffraction patterns of exemplary active material particles, according to various embodiments of the present disclosure. The graphs show both the calculated data and the measured data which corresponds well with the calculated data.

The active material particles shown in FIG. 2A were doped with lithium from a lithium salt dopant material. The active material particles included 32 wt.% silicon (of which about 10% was crystalline and remainder amorphous), 0.9 weight percent crystalline silicon oxide (and remainder amorphous silicon oxide), and 67 wt.% lithium metasilicate. The average size of the crystalline silicon nanoparticles was about 4.1 nm.

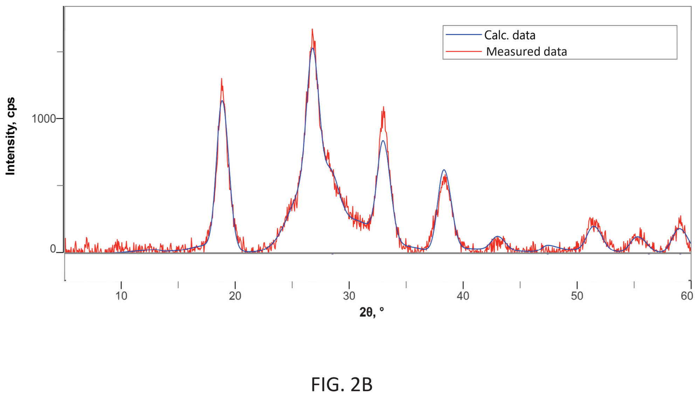

The active material particles shown in FIG. 2B were doped with lithium from a lithium salt dopant material. The active material particles included 29.9 wt.% silicon (of which about 7.2% was crystalline and remainder amorphous), 35.4 wt.% lithium disilicate, and 35.6 wt.% lithium metasilicate. The average size of the crystalline silicon nanoparticles was about 2.2 nm. No crystalline silicon oxide was detected. The particles may also contain amorphous silicon oxide which is not detectable from X-ray diffraction patterns.

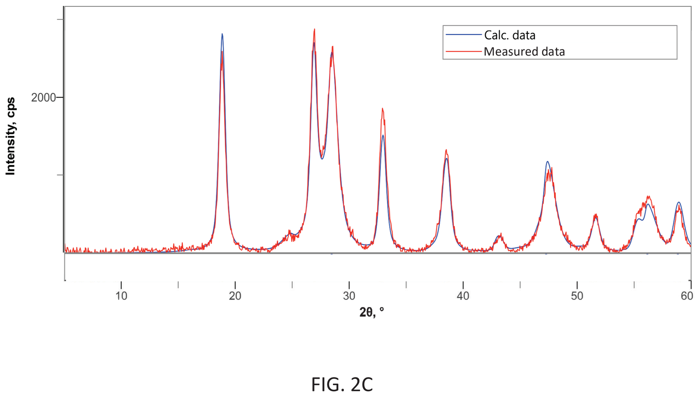

The active material particles shown in FIG. 2C were doped with lithium from a lithium salt dopant material. The active material particles included 48 wt.% silicon (of which about 31.3% was crystalline and remainder amorphous), 2.4 wt.% lithium disilicate, and 49.6 wt.% lithium metasilicate. The average size of the crystalline silicon nanoparticles was about 5.6 nm. No crystalline silicon oxide was detected. The particles may also contain amorphous silicon oxide which is not detectable from X-ray diffraction patterns.

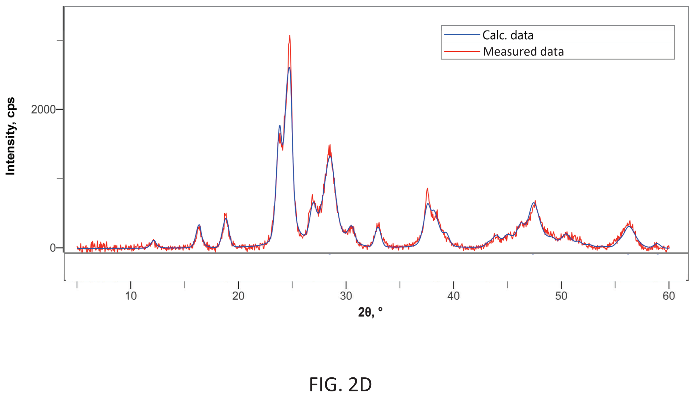

The active material particles shown in FIG. 2D were doped with lithium from a lithium salt dopant material. The active material particles included 37.6 wt.% silicon (of which about 12.5% was crystalline and remainder amorphous), 49.6 wt.% lithium disilicate, and 12.9 wt.% lithium metasilicate. The average size of the crystalline silicon nanoparticles was about 6 nm. No crystalline silicon oxide was detected. The particles may also contain amorphous silicon oxide which is not detectable from X-ray diffraction patterns.

It is believed that the embodiment methods provide better control of nanoparticle formation within the active material particles, with reduced gassing properties. As such, active materials having unexpectedly improved cycle life characteristics may be formed.

### Electrodes and Electrochemical Cells

According to various embodiments, the active material particles may be used to form an anode of an electrochemical cell. For example, the composite particles may be mixed with conductive agents, binders, and/or solvents, etc. to form a slurry. The slurry may be coated on a current collector to form an electrode.

The conductive agents may include a low defect turbostratic carbon material, carbon black, graphite, graphite oxide, graphene, exfoliated graphite or graphene, graphene oxide (GO), reduced graphene oxide (rGO), partially reduced graphene oxide, carbon nanotubes (CNTs) such as single walled, double walled or multi-walled CNTs, graphene platelets, nanoplatelets or nanoparticles, nanoplatelets or nanoparticles comprising a graphene sheet or a few graphene sheets, or combinations thereof.

An electrode may comprise an anode material mixture capable of providing 100% of the anode lithium capacity or may be mixed with other lithium active materials such as graphite, graphite oxide, graphene, graphene oxide, rGO, and partially reduced GO in a 0-100% mixture. If the electrode includes a binder to hold the electrode material together, the binder may comprise a polymeric material such as a polyvinylidene fluoride (PVDF), carboxy methyl cellulose (CMC), styrene butadiene rubber (SBR), CMC/SBR, polyacrylic acid (PAA), lithium polyacrylic acid (LiPAA), or combinations thereof. The electrode material components are then mixed into a polar solvent such as water or N-methyl-2- pyrrolidone (NMP) at a solids loading in the range of about 20 wt% to about 60 wt% to form an electrode slurry.

Mixing is typically achieved with a planetary mixer and high shear dispersion blade. The electrode slurry is then coated onto a metal substrate, typically copper or aluminum, at an appropriate mass loading to balance the lithium capacity of the anode with that of the selected cathode. Coating can be conducted using a variety of apparatus such as doctor blades, comma coaters, gravure coaters, and slot die coaters. After coating the slurry is dried under forced air between room temperature and about 120°C. Prior to cell assembly, the final electrode processing steps include pressing the electrode to reduce internal porosity and slitting to an appropriate geometry. Typical anode pressed densities can range from about 1.0 g/cc to about 1.7 g/cc depending on the composition of the electrode and the target application. Cathode pressed densities may range from about 2.7 to about 4.7 g/cc.

In various embodiments, the anode is used in an electrochemical cell also comprising a cathode and an electrolyte, such as a non-aqueous electrolyte comprising a lithium salt. The anode comprises the active material particles. In some embodiments, the anode may optionally comprise a low defect turbostratic carbon material which forms an envelope that surrounds the active material particles 100.

Construction of an electrochemical cell involves the pairing of a coated anode substrate and a coated cathode substrate that are electronically isolated from each other by a polymer and/or a ceramic electrically insulating separator. The electrode assembly is hermetically sealed in a housing, which may be of various structures, such as but not limited to a coin cell, a pouch cell, or a can cell, and contains a nonaqueous, ionically conductive electrolyte operatively associated with the anode and the cathode. The electrolyte is comprised of an inorganic salt dissolved in a nonaqueous solvent and more preferably an alkali metal salt dissolved in a mixture of low viscosity solvents including organic esters, ethers and dialkyl carbonates and high conductivity solvents including cyclic carbonates, cyclic esters, and cyclic amides. A non-limiting example of an electrolyte may include a lithium hexafluorophosphate (LiPF₆) or lithium bis(fluorosulfonyl)imide (LiFSi) salt in an organic solvent comprising one of: ethylene carbonate (EC), diethyl carbonate (DEC), dimethyl carbonate (DMC), fluoroethylene carbonate (FEC) or combinations thereof. Additional solvents useful with the embodiment of the present invention include dialkyl carbonates such as tetrahydrofuran (THF), methyl acetate (MA), diglyme, triglyme, tetraglyme, 1,2-dimethoxyethane (DME), 1,2-diethoxyethane (DEE), 1-ethoxy-2-methoxyethane (EME), ethyl methyl carbonate, methyl propyl carbonate, ethyl propyl carbonate, dipropyl carbonate, and combinations thereof. High permittivity solvents that may also be useful include cyclic carbonates, cyclic esters, and cyclic amides such as propylene carbonate (PC), butylene carbonate, acetonitrile, dimethyl sulfoxide, dimethyl formamide, dimethyl acetamide, gamma-valerolactone, gamma-butyrolactone (GBL), N-methyl-2-pyrrolidone (NMP), and combinations thereof. The electrolyte serves as a medium for migration of lithium ions between the anode and the cathode during electrochemical reactions of the cell, particularly during discharge and re-charge of the cell. The electrochemical cell may also have positive and negative terminal and/or contact structures.

Electrochemical cells including the active material particles may have a capacity of at least 1100 mAh/g, such as a capacity ranging from about 1100 mAh/g to about 1400 mAh/g, such as from about 1200 mAh/g to about 1300 mAh/g, or about 1250 mAh/g as normalized by the mass of active material particles 100. In some embodiments, the electrochemical cells may have a first cycle efficiency of at least 85%, such ranging from about 85% to about 95%, such as from about 88 to about 94%, such as about 92%.

Although the foregoing refers to particular preferred embodiments, it will be understood that the invention is not so limited. It will occur to those of ordinary skill in the art that various modifications may be made to the disclosed embodiments and that such modifications are intended to be within the scope of the invention. All of the publications, patent applications and patents cited herein are incorporated herein by reference in their entirety.

## Claims

1. Active material particles for a lithium ion secondary battery, the particles each comprising:
a primary phase comprising lithium silicate;
silicon nanoparticles disposed in the primary phase; and
nitrogen-based species.

2. The active material particles of claim 1, further comprising:
silicon oxide (SiOₓ) disposed in the primary phase, wherein x ranges from 0.8 to 2; and
a coating disposed on the surface of core particles comprising the primary phase, the coating comprising a carbon or a metal oxide coating.

3. The active material particles of claim 1, wherein:
a lithium content of the active material particles ranges from about 1 wt.% to about 12 wt.%;
the lithium silicate comprises at least 50 wt.% of lithium metasilicate (Li₂SiO₃), lithium disilicate (Li₂Si₂O₅) or a combination of the lithium metasilicate and the lithium disilicate; and
the primary phase comprises:
lithium metasilicate (Li₂SiO₃) as a primary component comprising at least 50 wt.% of the primary phase; and
lithium silicide (LiₓSi, 0<x<4.4), lithium disilicate (Li₂Si₂O₅), lithium orthosilicate (Li₄SiO₄), or any combination thereof as a secondary component comprising less than 50 wt.% of the primary phase.

4. The active material particles of claim 1, wherein the primary phase further comprises boron, aluminum or magnesium containing nanoparticles or a combination thereof, and the boron, aluminum or magnesium content of the active material particles ranges from about 0.05 wt.% to about 10 wt.%.

5. The active material particles of claim 1, wherein:
more than 50% of the silicon nanoparticles are amorphous;
less than 50% of the silicon nanoparticles are crystalline; and
the crystalline silicon nanoparticles have particle size of 10 nm or less.

6. The active material particles of claim 1, wherein the nitrogen-based species comprise at least one of oxynitride species, nitride species, imide species, or amine species.

7. The active material particles of claim 6, wherein:
the nitrogen-based species comprise at least one of amorphous silicon oxynitride regions or amorphous silicon nitride regions;
a nitrogen content of the active material particles ranges from about 0.1 wt.% to about 10 wt.%;
the primary phase comprises core particles surrounded by a coating; and
the core particles have a higher concentration of the nitrogen-based species closer to an outer surface of the core particles than closer to a middle of the core particles.

8. An electrode comprising:
the active material particles of claim 1; and
a binder.

9. A lithium secondary battery comprising:
an anode comprising the electrode of claim 8;
a separator;
a cathode; and
an electrolyte disposed between the anode and cathode.

10. A method of forming active material particles, the method comprising:
providing a powder mixture comprising lithium-containing dopant material powder particles and powder particles comprising silicon oxide; and
heating the powder mixture to form the active material particles comprising:
a primary phase comprising lithium silicate; and
silicon nanoparticles disposed in the primary phase.

11. The method of claim 10, wherein:
more than 50% of the silicon nanoparticles are amorphous;
less than 50% of the silicon nanoparticles are crystalline; and
the crystalline silicon nanoparticles have particle size of 10 nm or less.

12. The method of claim 10, wherein:
the powder mixture comprises a dry powder mixture which lacks a solvent;
the powder particles comprising silicon oxide are coated with a coating comprising at least one of amorphous carbon or metal oxide; and
lithium diffuses from the lithium-containing dopant material powder particles through the coating into the powder particles comprising silicon oxide during the step of heating the powder mixture;

13. The method of claim 12, wherein:
the lithium-containing dopant material powder particles comprise nitrogen-containing lithium salt particles, and nitrogen diffuses from the nitrogen-containing lithium salt particles through the coating into the powder particles comprising silicon oxide during the step of heating the powder mixture to form nitrogen-based species in the active material particles;
the powder particles comprising silicon oxide are converted into core particles comprising the primary phase during the step of heating the powder mixture;
the nitrogen-based species comprise at least one of amorphous silicon oxynitride regions or amorphous silicon nitride regions in the core particles;
the core particles have a higher concentration of the nitrogen-based species closer to an outer surface of the core particles than closer to a middle of the core particles; and
a nitrogen content of the active material particles ranges from about 0.1 wt.% to about 10 wt.%.

14. The method of claim 10, wherein:
a lithium content of the active material particles ranges from about 1 wt.% to about 12 wt.%; and
the lithium silicate comprises at least 50 wt.% of lithium metasilicate (Li₂SiO₃), lithium disilicate (Li₂Si₂O₅) or a combination of the lithium metasilicate and the lithium disilicate.

15. The method of claim 10, wherein the primary phase further comprises at least one of:
boron, aluminum or magnesium containing nanoparticles or a combination thereof, and the boron, aluminum or magnesium content of the active material particles ranges from about 0.05 wt.% to about 10 wt.%; or
silicon oxide (SiOₓ), wherein x ranges from 0.8 to 2.
